# EUROPEAN PATENT APPLICATION

(11) **EP 2 653 067 A1**
(43) Date of publication of application: **23.10.2013**
(21) Application number: 13164009.6
(22) Date of filing: 16.04.2013
(51) Int. Cl.: A47B 87/00, F16B 12/12

(54) **Furnishing element**

(30) Priority: 17.04.2012 IT UD20120066
(71) Applicant: Legnotecnica SRL, 33040 Moimacco (IT)
(72) Inventor: Busolini, Mauro, Frazione Purgessimo 33043 Cividale del Friuli (UD) (IT); Iacuzzi, Roberto, Frazione Bottenicco 33040 Moimacco (UD) (IT)
(74) Representative: Petraz, Gilberto Luigi

(57) **Abstract**

A furnishing element (10) of the modular type is formed by a plurality of modules (12) associated with each other by means of connection means (18). Each module (12) comprises a plurality of walls (14) constrained to each other. The connection means (18) comprise a plurality of coupling seatings (20) made on the walls (14) and mating connection blocks (22), cooperating by same-shape coupling with the coupling seatings (20) on one side and on the other side of a module (12) and of another adjacent module (12). Each of the coupling seatings (20) is blind and is delimited by a closed profile (24) which defines a first widened portion (26) suitable to allow the free positioning and removal of a coordinated connection block (22) and at least a second clamping portion (28) shaped to receive the insertion of the connection block (22) along a determinate axis (X) and to achieve a same-shape coupling with the connection block (22).

## Description

### FIELD OF THE INVENTION

The present invention concerns a furnishing element that can be put together in modular manner, formed by a plurality of modules, which is provided with reciprocal attachment means between said modules, which attachment means allow rapid and easy assembly.

### BACKGROUND OF THE INVENTION

It is known, for example from the international patent application WO-A-2010/052549 in the name of the present Applicant, to make containers or furnishing elements of a modular type, formed by a plurality of modules each comprising a plurality of walls constrained to each other consecutively, generally so as to define an internal containing compartment.

The modules are coupled with each other by attachment means.

The attachment means are formed by longitudinal coupling seatings or grooves, made externally, generally by milling, on said walls, and mating attachment strips, cooperating through same-shape coupling with the coupling seatings of one module and another adjacent module.

The coupling seatings have a cross section with an open profile, that is, they are open along the length. This has a disadvantage of an esthetic nature, since the apertures of the coupling seatings and the head ends of the strips remain visible in the finished furnishing element.

In particular, this disadvantage is keenly felt in the case of bookcases or other furnishing elements of the two-faced type, that is, those that have both the main faces visible.

In some circumstances, the insertion of the strips along the corresponding coupling seatings can also be laborious, or in any case not immediate and easy.

Documents EP-A-0512.930, US-A-2.824.775, GB-A-2.463.449 and FR-A-2.955.754 describe known furnishing elements. In particular, EP-A-0512.930 describes a modular furnishing element, formed by walls made of plastic material, which have through apertures or windows, that is, they are configured essentially as a frame, and which also have through coupling seatings for attachment by means of attachment components. Document US-A-2,824,775 also provides through coupling seatings.

Purpose of the present invention is to make a furnishing element, of the sectional modular type, which is economical, easily assembled and esthetically pleasing, without the disadvantage of having the attachment means of the various modules visible and without requiring laborious attachment operations.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a furnishing element of the modular type according to the present invention is formed by a plurality of modules associated with each other by connection means.

Each module comprises a plurality of walls constrained to each other.

The connection means are formed by a plurality of coupling seatings made on the walls and mating connection blocks, cooperating through same-shape coupling with the coupling seatings on one side and on the other side of a module and of another adjacent module.

According to the present invention, each of the coupling seatings is blind and is delimited by a closed profile which comprises a first widened portion suitable to allow the free positioning and removal of a coordinated connection block and at least a second clamping portion shaped to receive the insertion of the connection block along a determinate axis and to achieve a same-shape coupling with the connection block.

According to other features described here, moreover, each of the connection blocks is provided with a cross section with a double dovetailed closed profile that defines two mating and symmetrical coupling parts, each of which cooperates with a coupling seating of a respective wall of an adjacent module.

In this way, once the furnishing element is assembled, the coupling seatings and the connection blocks are hidden from sight, thus solving the esthetic problem of the visible connection means known in the state of the art.

Furthermore, the first widened portion allows a quick and easy positioning of the connection block which can subsequently be inserted, suitably centered, into the second portion of the connection block.

The furnishing element thus made is economical, easily assembled and esthetically pleasing, without the disadvantage of having the attachment means of the various modules visible and without requiring laborious attachment operations.

Moreover, the configuration of the coupling seatings, with a first widened portion for the insertion of the connection block and at least a second shaped clamping portion, allows to obtain the coupling seatings blind, that is, provided with a bottom, in any case allowing an easy, quick and intuitive insertion of the connection blocks. In this way, it can be avoided having to make the coupling seatings through, such as holes, apertures or windows, provided for example in the state of the art and that can give an unpleasing esthetic effect.

In one form of embodiment, the first portion and the second portion are communicating with each other by means of an aperture. The first portion is configured to house inside it the connection block at least when the latter is disposed substantially aligned with the axis along which it is inserted, so as to be easily positioned, sliding along said axis, inside the second portion, passing at least in part through said aperture.

In some forms of embodiment, a narrowing in section is provided in substantial correspondence to the aperture for the passage from the first portion to the second portion along said axis, which acts as a lead-in, guide and centering for the insertion of the connection block.

In some forms of embodiment, the first portion has a plan surface size greater than the surface defined by length and width of the connection block.

In some forms of embodiment, the second clamping portion has a shape and size mating to at least part of the connection block to achieve the coupling.

In some forms of embodiment, the second portion has a longitudinal development, along said axis of insertion of the connection block, coordinated to the connection block. The surface of the second portion is shaped in a mating manner to the connection block, substantially reproducing the length and width thereof and having lateral walls shaped in a mating manner to the connection blocks.

In some forms of embodiment of the present invention, each coupling seating has a depth less than the height of a coordinated connection block, so that a first coupling part is included inside the coupling seating and a second coupling part protrudes from the coupling seating to cooperate with another coordinated coupling seating of a wall of a second adjacent module.

According to a variant, the walls of each module are constrained to each other consecutively so as to define a containing compartment. For example, in this way it is possible to make bookcases, shelves or similar furnishing elements for containing objects or products in general.

In some forms of embodiment described here, each closed profile comprises a single second shaped clamping portion disposed on a single side with respect to the first widened portion. Or, in other forms of embodiment, each closed profile comprises two second shaped clamping portions disposed on one side and the other with respect to the first widened portion, and communicating with it through corresponding apertures. In forms of embodiment with two second shaped clamping portions, each coupling seating can be made with a symmetrical shape, in particular providing two identical second shaped clamping portions at the sides of a first widened portion.

The present invention also concerns a wall for a module for making a furnishing element of the modular type, formed by a plurality of modules associated with each other by means of connection means which include coupling seatings and mating connection blocks, cooperating by same-shape coupling with the coupling seatings on one side and on the other side of a module and of another adjacent module. The wall has a plurality of said coupling seatings.

Each of the coupling seatings is blind and is delimited by a closed profile which comprises a first widened portion suitable to allow the free positioning and removal of a coordinated connection block and at least a second clamping portion shaped to receive the insertion of the connection block along a determinate axis and to achieve a same-shape coupling with the connection block.

The present invention also concerns connection means that include blind coupling seatings and mating connection blocks, cooperating through same-shape coupling with the coupling seatings on one side and on the other side of a module and of another adjacent module of a furnishing element of the modular type. The coupling seatings are made on walls of said modules. Each of the coupling seatings is delimited by a closed profile which comprises a first widened portion suitable to allow the free positioning and removal of a coordinated connection block and at least a second clamping portion shaped to receive the insertion of the connection block along a determinate axis and to achieve a same-shape coupling with the connection block. Furthermore, each of the connection blocks is provided with a cross section with a double dovetailed closed profile that defines two mating and symmetrical coupling parts, each of which cooperates with a coupling seating of a respective wall of an adjacent module.

Moreover, the present invention also includes a method for making a furnishing element of the modular type, formed by a plurality of modules associated to each other by means of connection means. Each module is obtained with a plurality of walls that are constrained to each other.

The connection means are formed by a plurality of blind coupling seatings that are made, for example by removing material, such as milling, on the walls, and mating connection blocks. The connection blocks are put in cooperation by same-shape coupling with the coupling seatings on one side and on the other side of a module and of another adjacent module.

The method according to the present invention provides that each of the coupling seatings is blind and obtained with a cross section with a closed profile, defining a first widened portion suitable to allow the free positioning and removal of a coordinated connection block and at least a second clamping portion that is shaped to receive the insertion of the connection block along a determinate axis and to achieve a same-shape coupling with the connection block.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a perspective view in separate parts of a furnishing element of the present invention;
- fig. 2 is an enlarged detail of a perspective view in separate parts of a furnishing element of the present invention;
- fig. 3 is an enlarged detail of part of a furnishing element of the present invention;
- fig. 4 is a plan view from above of part of a furnishing element of the present invention;
- fig. 5 is a front view of part of a furnishing element of the present invention;
- figs. 6 - 9 are perspective views of some forms of embodiment of the present invention;
- fig. 10 is a perspective view of a possible combination of forms of embodiment of the present invention;
- fig. 11 is an exploded view of forms of embodiment of the present invention;
- fig. 12 is a perspective view of forms of embodiment of the present invention;
- fig. 13 represents a composition diagram of forms of embodiment of the present invention.

To facilitate comprehension, the same reference numbers have been used, where possible, to identify identical common elements in the drawings. Generally speaking, we will describe only the differences with respect to the individual forms of embodiment. It is understood that elements and characteristics of one form of embodiment can conveniently be incorporated into other forms of embodiment without further clarifications.

### DETAILED DESCRIPTION OF SOME FORMS OF EMBODIMENT

We shall now refer in detail to the various forms of embodiment of the invention, of which one or more examples are shown in the attached drawings. Each example is given as an illustration of the invention, and shall not be understood as a limitation thereof. For example, the characteristics illustrated or described insofar as they are part of one form of embodiment can be adopted on or in association with other forms of embodiment to produce another form of embodiment. It is understood that the present invention shall be comprehensive of all such modifications and variants.

With reference to the attached drawings, we shall now describe some forms of embodiment of a furnishing element 10 according to the present invention, which is the modular type, formed by a plurality of modules 12 associated with each other. For example, the furnishing element 10 can be a sectional bookcase, of the type that goes against the wall or two-faced, of the type that rests on the floor or is suspended on the wall, or any other type of furnishing element.

Each module 12 comprises a plurality of walls or panels 14, constrained to each other consecutively to define an internal containing compartment 16.

In some forms of embodiment, the walls 14 can be solid, that is, they do not have through holes, apertures or windows.

The constraint or connection between the walls 14 can be obtained by definitive or releasable attachment means, for example pins or shaped strips, or by gluing, or bushings or other hardware attachment elements, in any case preferably attachment means that, once the walls 14 have been attached to each other, are not visible.

For example, the modules 12 and the corresponding walls 14 can be made of wood, or wood-based materials, deriving from wood working, wood substitute materials, such as MDF, chipboard, plywood or suchlike. Or other materials can be used, for example plastic materials, metals or other, even though the choice of wood or wood substitutes may be preferred.

The modules 12 can be coupled to each other stably with connection means 18.

According to the invention, once the furnishing element 10 has been assembled, the connection means 18 are advantageously hidden from sight.

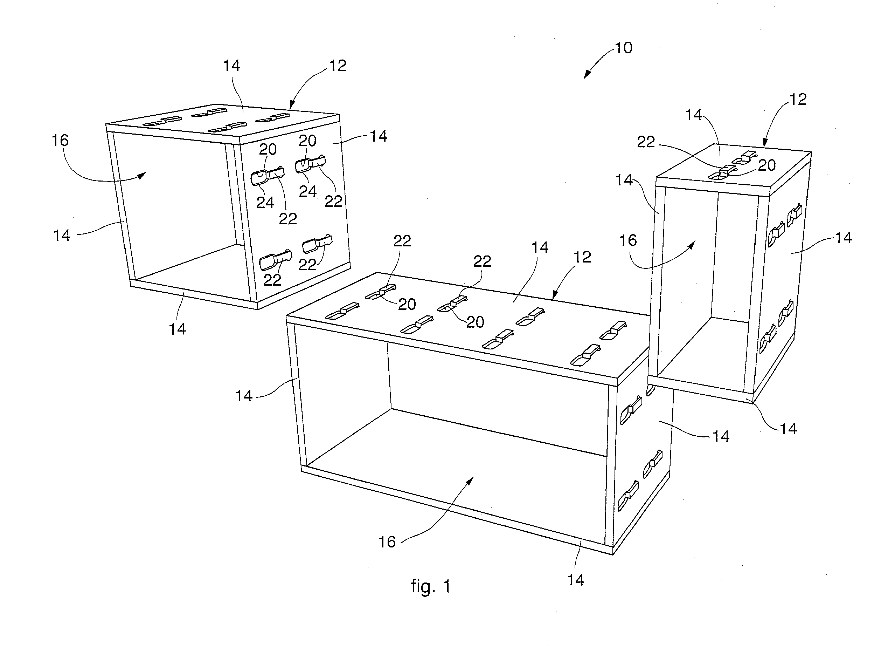

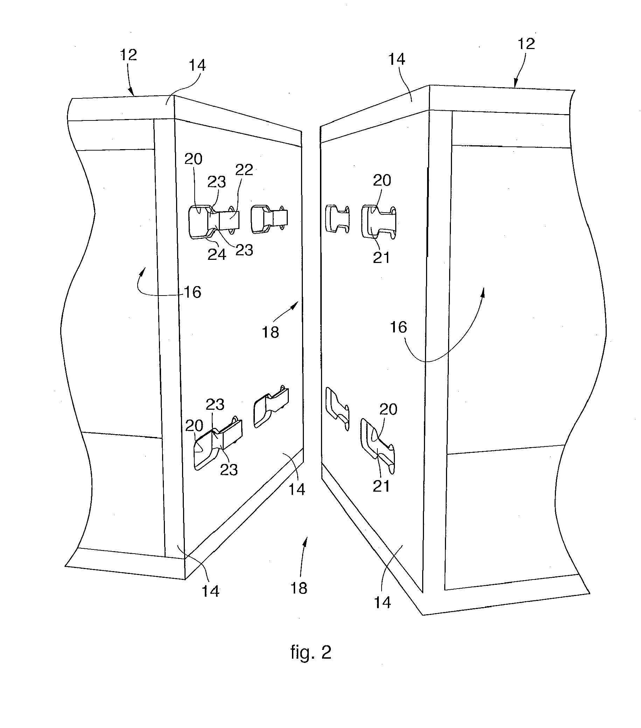

The connection means 18 are formed by a plurality of blind coupling seatings or grooves 20, made externally, generally by milling, on the walls 14, and mating connection blocks or strips 22, cooperating by same-shape coupling with the coupling seatings 20 on one side and on the other side of a module 12 and another adjacent module 12 (figs. 1 and 2).

The coupling seatings 20 are made on the walls 14 of the modules 12 with a desired pitch with respect to each other, with an equal cadence between the various walls 14, so that, when the walls 14 are put adjacent, the coupling seatings 20 are adjacent and aligned with enough precision to allow coupling by means of the connection blocks 22, without needing laborious and long alignment operations.

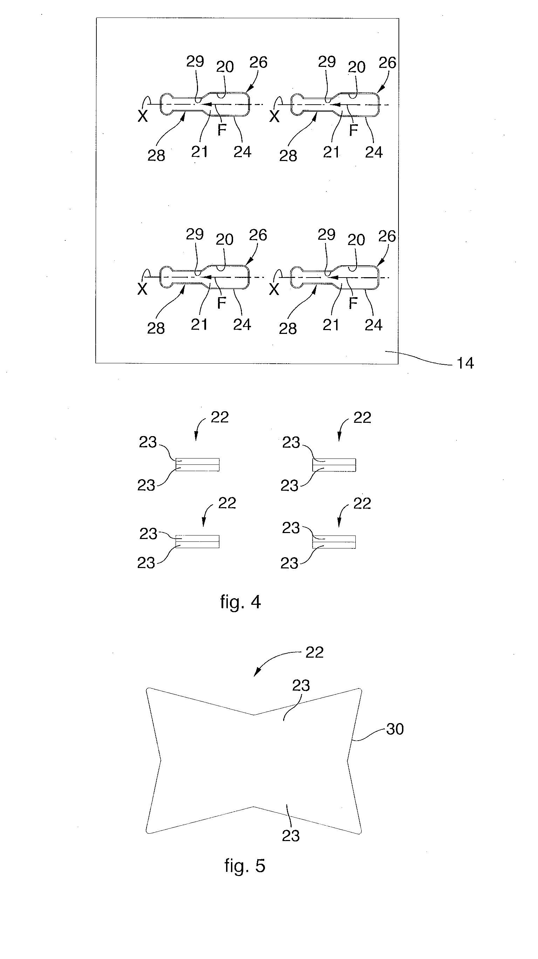

Fig. 4 shows the example of a wall 14 that has four coupling seatings 20, associated with four corresponding connection blocks 22. It goes without saying that, in other variants and forms of embodiment, depending on the needs of the application and final design of the furnishing element 10, walls 14 can be provided with a different number and/or disposition of the coupling seatings 20 and corresponding connection blocks 22.

In the case of walls of modules 12 that form the head and tail end of the furnishing element 10, they can be the traditional type, so as not to have the coupling seatings 20 externally, in sight.

The coupling seatings 20 are preferably made on one face only of each wall 14, generally the face that will face the outside, with the possible exception, as we said, of the head and tail walls.

Each wall 14 is therefore oriented with the coupling seatings 20 facing toward the outside with respect to the internal containing compartment 16, to cooperate with the connection blocks 22 so that they in turn can be coupled with other coupling seatings 20 of a wall 14 of an adjacent module 12 to be attached.

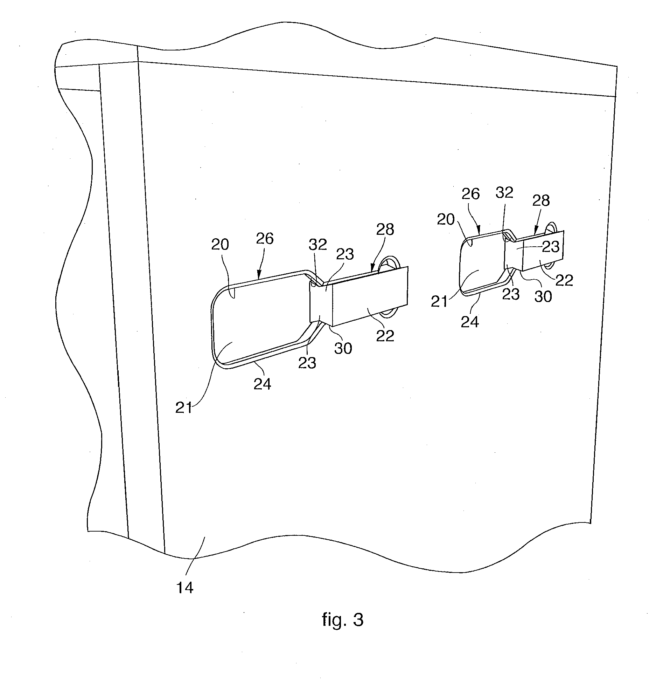

Each of the connection blocks 22 has for example an elongated parallelepiped shape and a cross section with a closed profile 30 that defines two mating and symmetrical coupling parts 23, each of which cooperates with a coupling seating 20 of a respective wall 14 of another adjacent module 12 (fig. 3).

In this way, a single connection block 22, having two coupling parts 23 for connection with the walls 14, can constrain two adjacent walls 14, and hence two modules 12, with respect to each other in a releasable manner.

Each of the coupling seatings 20 is delimited by a closed profile 24, and the coupling seatings 20 are blind, remaining comprised inside the corresponding walls 14 on which they are made.

Each coupling seating 20 has a bottom 21, delimited by the closed profile 24, on which a coordinated connection block 22 is disposed in abutment (fig. 4).

According to the present invention, each coupling seating 20 has a first widened portion 26 suitable to allow the free positioning and removal of a coordinated connection block 22 and a second clamping portion 28 that clamps the connection block 22 by same-shape coupling. The first portion 26 and the second portion 28 are communicating with each other by means of an aperture 29 (fig. 4). For example, to obtain this configuration, the coupling seating 20 can be shaped like a bottle, in which the body of the bottle represents the first portion 26 and the neck of the bottle represents the second portion 28.

The second clamping portion 28 has a shape and size mating to those of the connection block 22, to determine, in cooperation with a mating coupling part 23 of the latter, a desired same-shape coupling of the selectively releasable type.

The second portion 28 has a longitudinal development, along a reference axis X, coordinated with the connection blocks 22.

In particular, the surface of the second portion 28 is shaped mating with the connection block 22, substantially reproducing the length and width thereof in a precise manner, except for working tolerances, so as to determine the desired same-shape coupling.

Advantageously, the second portion 28 has lateral walls 32 (fig. 3) shaped mating with the coupling parts 23 of the connection blocks 22, retaining the latter inside it.

The connection block 22 can be inserted into the second portion 28, where it achieves the same-shape coupling, by sliding along the axis X, as indicated by arrow F in fig. 4.

Once the connection block 22 has been inserted into the second portion 28, a coupling part 23 of the connection block 22 achieves the same-shape coupling, while another coupling part 23 protrudes from the coupling seating 20, since the latter is less deep than the height of the connection block 22, to cooperate with another coordinated coupling seating 20 made on a wall 14 of another module 12, as described in more detail hereafter.

For example, the connection block 22 can have a cross section with a double dovetailed closed profile 30, as shown in figs. 1, 2, 3 and 5.

In possible forms of embodiment, which can be combined with all the other forms of embodiment described here, a coupling part 23 of the connection block 22 is the simple dovetailed type. For example, the connection block 22 can therefore be formed by two simple dovetailed coupling parts 23, disposed opposite each other, to achieve the desired double dovetailed configuration.

In a coordinated manner, in possible example forms of embodiment, which can be combined with all the other forms of embodiment described here, the second portion 28 has its lateral walls 32 that can be configured for coupling with the simple dovetailed coupling part 23 of the connection block 22, that is, they are flared or divergent toward the inside of the corresponding wall 14, correlated with the shape of the double dovetailed closed profile 30 of the connection block 22.

According to one form of embodiment of the present invention, the first portion 26 is configured to house inside it the connection block 22 at least when it is disposed substantially aligned with the axis X, so as to be easily inserted, sliding along the axis X, inside the second portion 28, passing at least partly or completely through the aperture 29.

This allows to insert the connection block 22 into the first portion 26 with a transverse movement, advantageously perpendicular, to the wall 14, and to subsequently insert it into the second portion 28 by means of a sliding movement tangential to the bottom 21 of the coupling seating 20 in the direction indicated by arrow F.

This reciprocal configuration of first portion 26 and second portion 28 is advantageously obtained by providing that the first portion 26 is widened with respect to the second portion 28.

In this case, in substantial correspondence with the aperture 29, there is a narrower section, or gap, for the passage from the first portion 26 to the second portion 28 along the axis X which functions as a lead-in, guide and centering for the insertion of the connection block 22.

In particular, the first portion 26 has a plan surface size that is greater than the surface defined by length and width of the connection block 22, and hence of the second portion 28, so as to be able to easily accommodate the connection block 22 inside it.

This allows to center the connection block 22 easily and quickly, positioning it in the first portion 26 which is sized to accommodate it completely, so as to insert it with precision and repeatability into the second portion 28, where it achieves the same-shape coupling.

Furthermore, once a connection block 22 has been inserted into one of the coupling seatings 20, this configuration is also advantageous to achieve the coupling of the connection block 22 itself with another coordinated coupling seating 20 of a wall 14 of an adjacent module 12 to be constrained. To this purpose, as can easily be seen in fig. 2, the walls 14 are reciprocally oriented so that the coupling seatings 20 of a first wall 14 face in one direction, while the coupling seatings 20 of a second wall 14 face in an opposite direction.

In this way, it is easy and simple to align the connection blocks 22 precisely, which are already inserted in the coupling seatings 20 of the first wall 14, with the first portions 26 of the coupling seatings 20 of the second wall 14, and then, by a linear sliding movement, to insert the connection blocks 22 into the second portions 28 of the coupling seatings 20 of the second wall 14 as well.

It is advantageous to provide that the coupling seatings 20 are disposed aligned in rows that are more displaced to one side of the wall 14 with respect to the center line, compared with the opposite side, by a determinate length, as can be seen in fig. 4 where the coupling seatings 20 are more displaced toward the right side. This is so that, at the moment of connection with another wall 14, the linear sliding of the connection block 22 by a determinate segment or travel from the first portion 26 inside the second portion 28 determines a precise alignment of the head and tail surfaces or edges of the walls 14, without un-esthetic offsetting or misalignments.

The first portion 26 of the other coordinated coupling seating 20, being wider, allows the easy and convenient positioning of the coupling part 23 of the connection block 22 that protrudes from the coupling seating 20 already engaged.

Once the connection block 22 has thus been located in the other coordinated coupling seating 20, a reciprocal tangential sliding movement is sufficient, as we said, that is, parallel to the surface, of the two walls 14 to be constrained, to insert the connection block 22, in particular its coupling part 23 that is not yet coupled, into the second portion 28 of the other coordinated coupling seating 20.

In this way, the two walls 14, and therefore the two modules 12, will be stably coupled with each other, without needing laborious alignment operations.

Once all the necessary connection blocks 22 have been inserted into the corresponding coupling seatings 20 of a first wall 14 of a first module 12, the alignment and connection operation is obtained, securely and substantially automatically, for all the coupling seatings 20 and corresponding connection blocks 22 of a second wall 14 of a second module 12 that is positioned adjacent to the first module 12 so that they can be constrained to each other.

By repeating these assembly operations described above simply and quickly, it is possible to modularly construct a sectional furnishing element 10 which is stable and secure, while doing so in a simple and economical way.

In some forms of embodiment, which can be combined with all the other forms of embodiment described here, each module 12 is formed by a plurality of consecutive walls 14 to define an essentially polygonal shape. For example, four walls 14 can be provided, for example disposed at 90° with respect to each other to define a cubic or parallelepiped box-like structure with a rectangular base, depending on whether the walls 14 are equal or have different sizes. The reciprocal disposition of the consecutive walls 14 defines a through compartment inside them. In other words, the module 12 can have only lateral consecutive walls 14, and can be without front or bottom panels. The through compartment defined by the consecutive walls 14 has an axis of complete passage parallel to the axis X along which the closed profile 24 mainly develops, and along which the connection block 22 is inserted into the widened first portion 26. In other words, the coupling seatings 20 develop mainly longitudinally in one direction, identified by said axis X, parallel to the axis of complete passage of the through compartment defined by the consecutive walls 14.

In some forms of embodiment, which can be combined with all the other forms of embodiment described here, a wall 14 can for example comprise one, two, three, four or even more than four coupling seatings 20. With reference to the attached drawings, for example walls 14 with two coupling seatings 20 can be provided.

In some forms of embodiment, which can be combined with all the other forms of embodiment described here, a module 12 of the furnishing element 10 can have all the walls 14 provided with one or more coupling seatings 20, or only some of the walls 14 provided with one or more coupling seatings 20, or again only one of the walls 14 provided with one or more coupling seatings 20.

Figs. 1-4 are used to describe forms of embodiment of a furnishing element 10 according to forms of embodiment described here, in which said closed profile 24 of each coupling seating 20 defines a single second shaped clamping portion 28 disposed on one side only with respect to the widened first portion and communicating with it through said aperture 29.

In particular, in forms of embodiment described with reference to figs. 1-4, each closed profile 24 can be configured like a bottle.

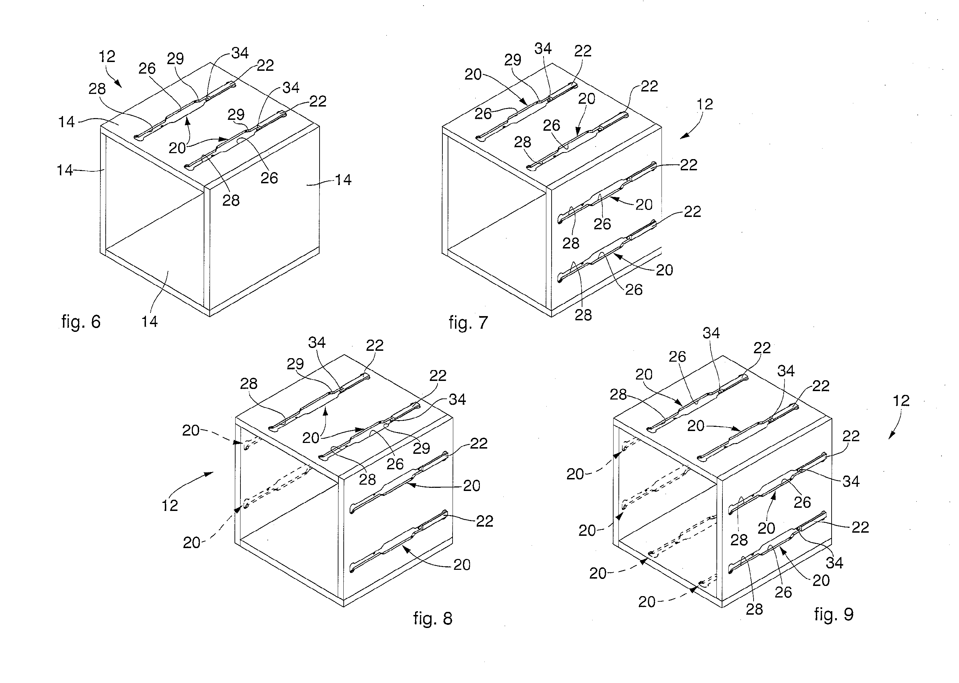

Figs. 6-12 are used to describe forms of embodiment of a furnishing element 10 according to other forms of embodiment described here, in which said closed profile 24 of each coupling seating 20 defines two second shaped clamping portions 28 disposed on one side and the other with respect to the first widened portion 26 and communicating with it through corresponding apertures 29.

In particular, in forms of embodiment described with reference to figs. 6-12, the two second shaped clamping portions 28 of each closed profile 24 are identical. In other words, each coupling seating 20 is symmetrical, that is, it has a symmetrical closed profile 24.

In particular, in forms of embodiment described with reference to figs. 6-12, each closed profile 24 can be configured like a double bottle, that is, a bottle with a double neck.

In some forms of embodiment, which can be combined with all the other forms of embodiment described here, it may be provided to use a clamping element 34 (see for example figs. 6-9, although this can also apply for the forms of embodiment described using figs. 1-4), disposed stably in the coupling seating 20 between the first portion 26 and the second portion 28 that will be engaged by a corresponding connection block 22, in cooperation with the latter, for example abutting against an end facing toward the first portion 26, for example near the aperture 29, to prevent the connection block 22 from accidentally detaching or becoming loose along a travel inverse to the direction of insertion along axis X.

In some forms of embodiment, which can be combined with all the other forms of embodiment described here, the one second clamping portion 28 (for example figs. 1-4) or two shaped second clamping portions 28 (for example figs. 6-12) are configured with a reduced or smaller section, for example constant, than the section of the corresponding first widened portion 26.

Making the coupling seatings 20 as described with reference to figs. 6-12 can be advantageous in that it allows to make, for example by milling, a single wall 14 that has a desired number of coupling seatings 20, for example two, but there may be three, four or more than four, and to use the walls 14 made in this way both for the sides, left and right, and also for the base and top. This symmetry and polyvalence gives advantages in terms of production costs, storage and logistics, and also facilitates the assembly of each module 12 and the overall furnishing element 10, and making said assembly extremely versatile and intuitive.

In particular, in forms of embodiment described with reference to figs. 6-12, it will be possible to position as desired the connection blocks 22 in one or the other of the two second shaped clamping portions 28 of the coupling seatings 20, depending on the desired orientation and final position of the corresponding wall 14, in this way using walls 14 with coupling seatings 20 all of the same type, considerably facilitating purchasing operations of the walls 14 and the assembly thereof.

For example, in some forms of embodiment, which can be combined with all the other forms of embodiment described here, in particular providing coupling seatings 20 according to the description given here, it may be possible to provide, in combination or repetition with each other so as to obtain the desired furnishing element 10:
- a module 12 with a plurality of walls 14, for example four, of which a single wall 14 provided with one or more coupling seatings 20 (see for example fig. 6, in which two coupling seatings 20 are provided by way of example); or
- a module 12 with a plurality of walls 14, for example four, of which two walls 14, for example consecutive, provided with one or more coupling seatings 20 (see for example fig. 7, in which two coupling seatings 20 are provided by way of example for each wall 14); or
- a module 12 with a plurality of walls 14, for example four, of which three walls 14, for example consecutive, provided with one or more coupling seatings 20 (see for example fig. 8, in which two coupling seatings 20 are provided by way of example for each wall 14); or again
- a module 12 with a plurality of walls 14, for example four, of which four walls 14, for example consecutive, provided with one or more coupling seatings 20 (see for example fig. 9, in which two coupling seatings 20 are provided by way of example for each wall 14).

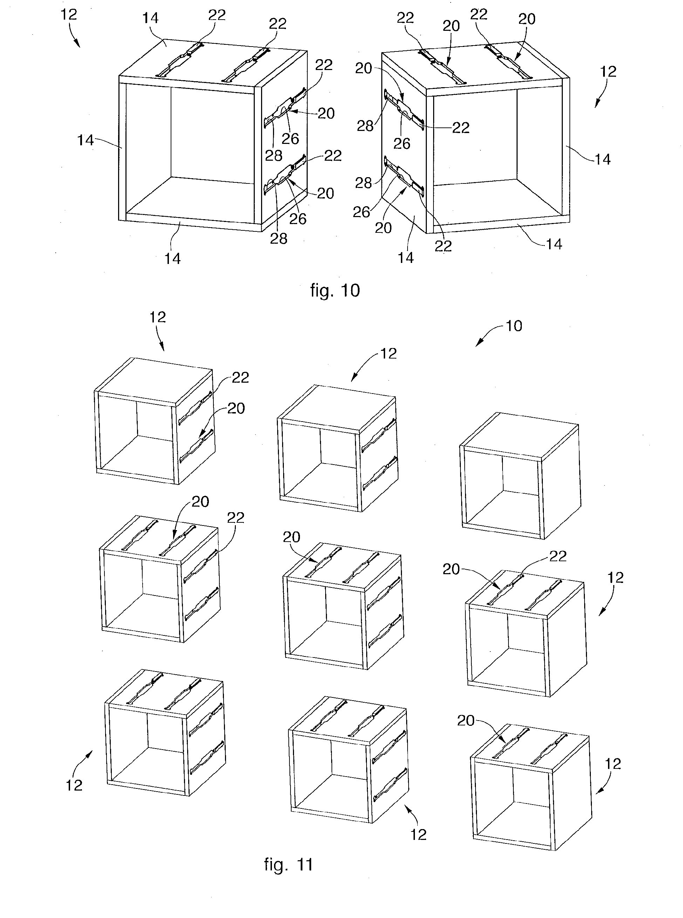

Fig. 10 is used to describe forms of embodiment in which modules 12, for example two modules 12 made as described with reference to fig. 7, can be reciprocally connected side to side by cooperation of the connection blocks 22 suitably disposed in the coupling seatings 20.

As can easily be seen for example in fig. 10, to be able to couple the two modules 12, the connection blocks 22 can be disposed, on the facing lateral walls 14 of the modules 12 that will be coupled, in second portions 28 provided in specular positions on one module 12 and the other, leaving free the remaining second portions 28 of each coupling seating 20, which will be engaged only later when coupling is completed.

In particular, with reference for example to fig. 10, the left hand module 12 may have the connection blocks 22 located in the second portions 28 facing for example to the rear while, to achieve a mating coupling, the right-hand module 12 may have the connection blocks 22 located in the second portions 28 facing for example to the front, that is, in a specular position.

In this way, by positioning the modules 12 adjacent to each other, the first portions 26 of one module 12 can be aligned, or faced, toward the second portions 28 of the other module 12 which are thus engaged by the connection blocks 22, in particular the first portions 26 will be able to receive inside them the protruding part of the connection blocks 22 and, by means of a corresponding sliding movement, the connection blocks 22 will be able to be inserted into and engage with the second portions 28 left free of the adjacent module 12, thus achieving the desired same-shape coupling.

As we said, by varying the position of the connection blocks 22 from one second shaped clamping portion 28 to another of the same coupling seating 20, it is possible to adapt the same wall 14 for left/right use, or high/low use, without needing to modify the wall 14 itself.

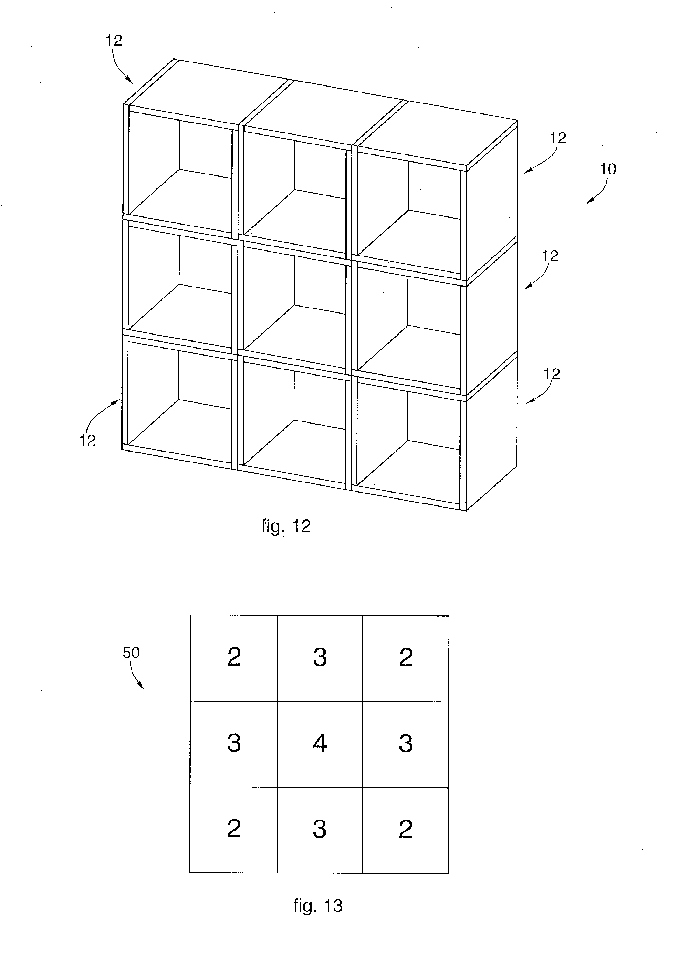

Figs. 11 and 12 are used to describe forms of embodiment in which a plurality of modules 12 can be assembled to obtain a furnishing element 10 according to the present description. For example with reference to fig. 11, the modules 12 are shown in an exploded view, to indicate the possibility of modular coupling according to forms of embodiment described here, while for example in fig. 12 it can be seen how, once the modules 12 are connected, the connections and attachments of the various modules 12 are hidden, not visible from the outside, thus improving the esthetic appearance, with a clean and essential design, without attachments in sight.

Fig. 13 is used to describe forms of embodiment according to the present invention of an example composition diagram 50, for example coordinated with forms of embodiment described with reference to figs. 11 and 12, to design and obtain a desired furnishing element 10. For example, the composition diagram 50 can correspond geometrically in proportion to the front development of the furnishing element 10, as can be seen by comparing for example figs. 12 and 13. In particular, a client or user who wishes to make up a furnishing element 10 modularly according to forms of embodiment described here will be able to prepare a composition diagram and, depending on the number of sides engaged and occupied by each module 12, to assign a corresponding number to the module 12 to be used for a given position in the composition diagram, corresponding to the number of walls 14 that the module has to include provided with coupling seatings 20. For example, in the case of a module 12 with four walls 14, all with coupling seatings 20, provided as central module 12, or in any case engaged on four sides, the number four (4) will be assigned, in the case of a module 12 with three walls 14 with coupling seatings 20 engaged on three sides, for example a lateral module, the number three (3) will be assigned, in the case of a module 12 with two walls 14 with coupling seatings 20 engaged on two sides, for example a corner module, the number two (2) will be assigned, and in the case of a module 12 with one wall with coupling seatings 20 engaged on one side, for example a protruding module, the number one (1) will be assigned. In this way, the client or user will be able to go to a distributor or seller of panels 14 to obtain the modules 12 for the desired furnishing element 10, purchasing or picking up the correct quantity of walls 14, with coupling seatings 20 and without coupling seatings 20, to obtain the modules 12, number 4, 3, 2, 1, defined with the composition diagram. In fact, with the forms of embodiment described using figs. 6-12, the symmetry of the coupling seatings 20 is advantageous, since the walls 14 are all the same, thus greatly reducing the difficulties of assembly for the final user.

## Claims

1. Furnishing element of the modular type, formed by a plurality of modules (12) associated with each other by means of connection means (18), each module (12) comprising a plurality of walls (14) constrained to each other, said connection means (18) comprising a plurality of coupling seatings (20) made on said walls (14) and mating connection blocks (22), cooperating by same-shape coupling with the coupling seatings (20) on one side and on the other side of a module (12) and of another adjacent module (12), **characterized in that** each of the coupling seatings (20) is blind and is delimited by a closed profile (24) which comprises a first widened portion (26) suitable to allow the free positioning and removal of a coordinated connection block (22) and at least a second clamping portion (28) shaped to receive the insertion of the connection block (22) along a determinate axis (X) and to achieve a same-shape coupling with the connection block (22), wherein each of said connection blocks (22) is provided with a cross section with a double dovetailed closed profile (30) which defines two mating and symmetrical coupling parts (23), each of which cooperates with a coupling seating (20) of a respective wall (14) of an adjacent module (12).

2. Furnishing element as in claim 1, **characterized in that** the first portion (26) and the at least one second portion (28) are communicating with each other by means of an aperture (29), the first portion (26) being configured to house inside it the connection block (22) at least when the latter is disposed substantially aligned with the axis (X), so as to be easily inserted, sliding along said axis (X), inside the second portion (28), passing at least in part through said aperture (29).

3. Furnishing element as in claim 2, **characterized in that** a narrowing in section is provided in substantial correspondence to the aperture (29) for the passage from the first portion (26) to the second portion (28) along said axis (X), which acts as a lead-in, guide and centering for the insertion of the connection block (22).

4. Furnishing element as in claim 1, 2 or 3, **characterized in that** the first portion (26) has a plan surface size greater than the surface defined by length and width of the connection block (22).

5. Furnishing element as in any claim hereinbefore, **characterized in that** the second clamping portion (28) has a shape and size mating to at least part (23) of the connection block (22) to achieve the coupling.

6. Furnishing element as in any claim hereinbefore, **characterized in that** the second portion (28) has a longitudinal development, along said axis (X), coordinated to the connection block (22), the surface of the second portion (28) being shaped in a mating manner to the connection block (22), substantially reproducing length and width and having lateral walls (32) shaped in a mating manner to the connection blocks (22).

7. Furnishing element as in any claim hereinbefore, **characterized in that** each blind coupling seating (20) has a bottom (21), delimited by said closed profile (24), on which a coordinated connection block (22) is disposed in abutment.

8. Furnishing element as in any claim hereinbefore, **characterized in that** the walls (14) are solid.

9. Furnishing element as in any claim hereinbefore, **characterized in that** each coupling seating (20) has a depth less than the height of a coordinated connection block (22), so that a first coupling part (23) is included inside the coupling seating (20) and a second coupling part (23) protrudes from the coupling seating (20) to cooperate with another coordinated coupling seating (20) of a wall (14) of a second adjacent module (12).

10. Furnishing element as in any claim hereinbefore, **characterized in that** each module (12) is formed by a plurality of consecutive walls (14), to define internally a through compartment which has a passing axis parallel to the axis (X) along which the closed profile (24) mainly develops and along which the connection block (22) is inserted into the first widened portion (26).

11. Furnishing element as in any claim hereinbefore, **characterized in that** said closed profile (24) comprises a single second shaped clamping portion (28) disposed on a single side with respect to the first widened portion (26).

12. Furnishing element as in claim 11, **characterized in that** said closed profile (24) is configured like a bottle.

13. Furnishing element as in any claim from 1 to 10, **characterized in that** said closed profile (24) comprises two second shaped clamping portions (28) disposed on one side and on the other with respect to the first widened portion (26) and communicating with it through corresponding apertures (29).

14. Furnishing element as in claim 12, **characterized in that** said closed profile (24) is configured like a double bottle, that is a bottle with a double neck.

15. Wall for a module (12) to make a furnishing element (10) of the modular type, formed by a plurality of modules (12) associated with each other by means of connection means (18) which include coupling seatings (20) and mating connection blocks (22), cooperating by same-shape coupling with the coupling seatings (20) on one side and on the other side of a module (12) and of another adjacent module (12), said wall having a plurality of said coupling seatings (20), **characterized in that** each of the coupling seatings (20) is blind and is delimited by a closed profile (24) which comprises a first widened portion (26) suitable to allow the free positioning and removal of a coordinated connection block (22) and at least a second clamping portion (28) shaped to receive the insertion of the connection block (22) along a determinate axis (X) and to achieve a same-shape coupling with the connection block (22).
